# EUROPÄISCHE PATENTANMELDUNG

(11) **EP 0 983 960 A1**
(43) Veröffentlichungstag der Anmeldung: **08.03.2000**
(21) Anmeldenummer: 98116566.5
(22) Anmeldetag: 02.09.1998
(51) Int. Cl.: B66F 9/20, H02G 11/02, B60R 16/02

(54) **Gabelhubwagen mit Batterien und intergriertem Ladegerät**

(71) Anmelder: Crown Gabelstapler GmbH, D-81677 München (DE)
(72) Erfinder: Pulskamp, Steven R., New Bremen, Ohio 45869 (US); Adelsperger, Peter, 85435 Erding (DE)
(74) Vertreter: Sandmann, Joachim, Dr.

(57) **Zusammenfassung**

Der Gabelhubwagen 1 ist mit Batterien für den Fahrantrieb und den Hubantrieb bestückt und weist ein integriertes Ladegerät mit einem Kabel 9 und einem Netzstecker 10 auf. Das Kabel 9 ist auf eine innerhalb der Fahrzeugverkleidung fest eingebaute Kabelaufrolltrommel 11 mit einer Zugentlastung aufgewickelt und durch eine das Eindringen von Gegenständen verhindernde enge Gehäuseöffnung 13 nach außen geführt und mit einem Netzstecker 10 versehen. Dieser läßt sich lagegesichert in eine Haltesteckdose 15 einstecken, wodurch die elektrische Verbindung zwischen dem Ladegerät und den Batterien unterbrochen und die Stromzuführung zum Fahrantrieb und zum Hubantrieb geschlossen wird. Wird der Netzstecker 10 zum Aufladen der Batterien an einer Netzsteckdose aus der Haltesteckdose 15 herausgezogen, so wird dadurch die Stromzuführung von den Batterien zum Fahrantrieb und zum Hubantrieb unterbrochen und die elektrische Verbindung zwischen dem Ladegerät und den Batterien hergestellt.

## Beschreibung

Die Erfindung bezieht sich auf einen Gabelhubwagen mit Batterien für den Fahrbetrieb und/oder das Anheben des Lastteils und mit einen integrierten Ladegerät, das mit einem einen Netzstecker aufweisenden Kabel zum Anschluß an eine Netzsteckdose versehen ist.

Derartige Gabelhubwagen, deren Batterien in Betriebspausen einfach an jeder Netzsteckdose (220 V) aufgeladen werden können, sind bekannt. Dabei sind im allgemeinen die Batterien im mit der Hubgabel versehenen Lastteil und das Ladegerät im lenkbaren Antriebsteil des Gabelhubwagens untergebracht. Das am Ladegerät angeschlossene Kabel muß eine bestimmte Mindestlänge aufweisen, damit zum Aufladen der Batterien der Netzstecker bequem in eine Steckdose eingeführt werden kann, ohne daß der Gabelhubwagen allzu dicht an die Steckdose heranmanövriert werden muß. Außerhalb des Ladebetriebs muß dieses Kabel in nicht störender Weise im Gabelhubwagen untergebracht werden, wozu eine Kabelaufnahmekammer hinter einer Verkleidungswand vorgesehen ist.

Die Zugänglichkeit dieser Kabelaufnahmekammer erfordert eine Gehäuse- oder Verkleidungsöffnung in einer Größe, die zumindest das problemlose Hindurchführen des Kabels ermöglicht. Durch eine solche relativ große Öffnung können in unerwünschter Weise Gegenstände in das Fahrzeuginnere gelangen. Dem wird zwar durch eine die Öffnung abdeckende Verschlußklappe entgegengewirkt, diese bedeutet jedoch einen zusätzlichen Aufwand und setzt voraus, daß die Klappe nach jedem Ladevorgang wieder ordnungsgemäß verschlossen wird, was nicht immer gewährleistet ist. Außerdem ist es bekannt, das Kabel zur besseren Handhabbarkeit dauerhaft schraubenförmig zu wickeln, so daß es auf die jeweils erforderliche Länge gestreckt werden kann. Hiermit ist jedoch der Nachteil verbunden, daß auf den in der Netzsteckdose befindlichen Netzstecker ein entsprechender Zug ausgeübt wird, was bei ungenügender Klemmkraft der Steckverbindung zu einer Unterbrechung des Stromflusses beim Laden führen kann.

Dementsprechend liegt der Erfindung die Aufgabe zugrunde, die Unterbringung des Kabels am Fahrzeug zu verbessern, so daß die Handhabung besonders einfach ist und störende Einflüsse ausgeschaltet sind.

Diese Aufgabe wird erfindungsgemäß dadurch gelöst, daß eine fest eingebaute Kabelaufrolltrommel vorgesehen ist, von der das Kabel durch eine dem Kabelquerschnitt angepaßte Gehäuseöffnung nach außen zum Netzstecker geführt ist.

Zweckmäßige Ausgestaltungen und Weiterbildungen sind in den Unteransprüchen aufgeführt. Dazu gehören die Zugentlastung der Kabelaufrolltrommel, eine am Fahrzeug vorgesehene Haltesteckdose für den stets außerhalb der angepaßten Gehäuseöffnung befindlichen Netzstecker und zugehörige Sicherungsmaßnahmen, die in Abhängigkeit davon wirksam sind, ob der Netzstecker in die Haltesteckdose eingesteckt ist oder nicht.

Da beim erfindungsgemäßen Gabelhubwagen nur eine kleine Gehäuseöffnung vorgesehen und diese ständig durch das Kabel ausgefüllt ist, besteht keine Gefahr, daß Fremdkörper durch die Gehäuseöffnung eindringen, und dementsprechend bedarf es auch keiner besonderen Verschlußklappe. Die Kabeltrommel bietet Platz für ein ausreichend langes Kabel und verhindert ein Verwickeln oder Verhaken des Kabels, das dessen glatten Lauf durch die Gehäuseöffnung behindern könnte. Die Kabelaufrolltrommel ist zwar in Aufwickelsinn vorgespannt, jedoch vorzugsweise mit einer Zugentlastung versehen, so daß auf den beim Laden in die Netzsteckdose eingesteckten Netzstecker kein Zug einwirkt.

Ein Ausführungsbeispiel der Erfindung wird nachfolgend anhand einer schematischen Zeichnung näher erläutert. Es zeigen:
- Figur 1: eine perspektivische Teildarstellung eines Gabelhubwagens mit hochgestellter Deichsel; und
- Figur 2: eine Figur 1 entsprechende Darstellung ohne Deichsel und ohne vordere Verkleidungswand mit Blick auf die eingebaute Kabelaufrolltrommel.

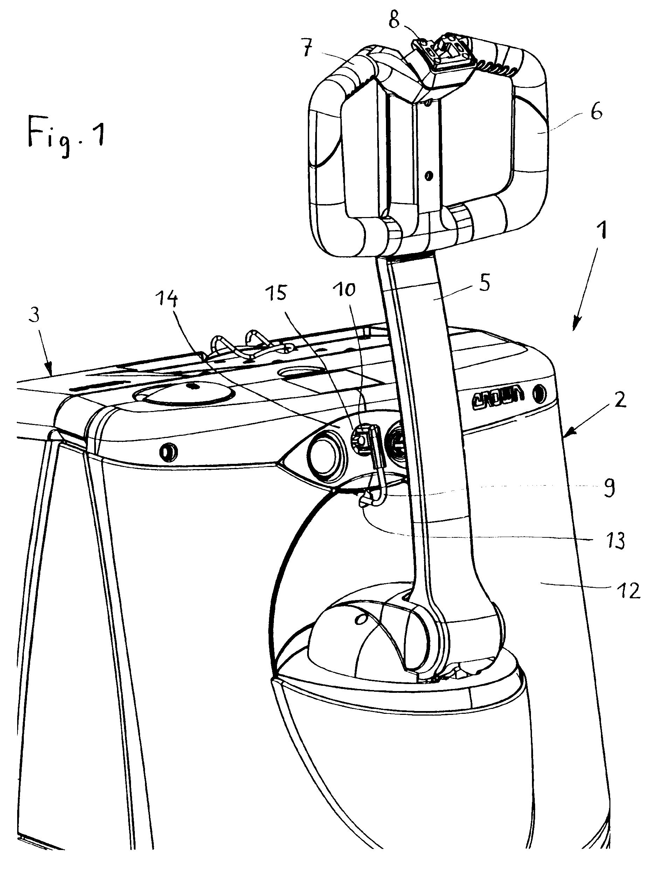

Der Gabelhubwagen 1 besteht in bekannter Weise aus einem Antriebsteil 2 und einem gegenüber diesen anhebbaren Lastteil 3, von dem die bodennahen Gabelarme (nicht dargestellt) nach hinten wegragen. Der Antriebsteil 2 stützt sich auf einem Antriebsrad (nicht dargestellt) und Stützrädern 4 ab. Er ist mittels einer Deichsel 5 lenkbar, die sich gemäß Figur 1 in der hochgeklappten Stellung befindet, in der der Fahrantrieb abgeschaltet ist. Die Deichsel 5 weist einen Deichselkopf 6 mit Handgriffen 7 und Schaltern 8 zum Betätigen des Fahrantriebs und des Hubantriebs auf.

Für diese Antriebe sind Batterien (nicht dargestellt) vorgesehen, die im Lastteil 3 nahe dem Antriebsteil 2 untergebracht sind. In diesem ist ein Ladegerät (nicht dargestellt) untergebracht, das für den Ladebetrieb über ein Kabel 9 mit einem Netzstecker 10 an eine 220 V-Netzsteckdose anschließbar ist. Das Ladegerät ist über eine elektrische Verbindungsleitung (nicht dargestellt) mit den Batterien verbunden, die mit 24 V Spannung betrieben werden.

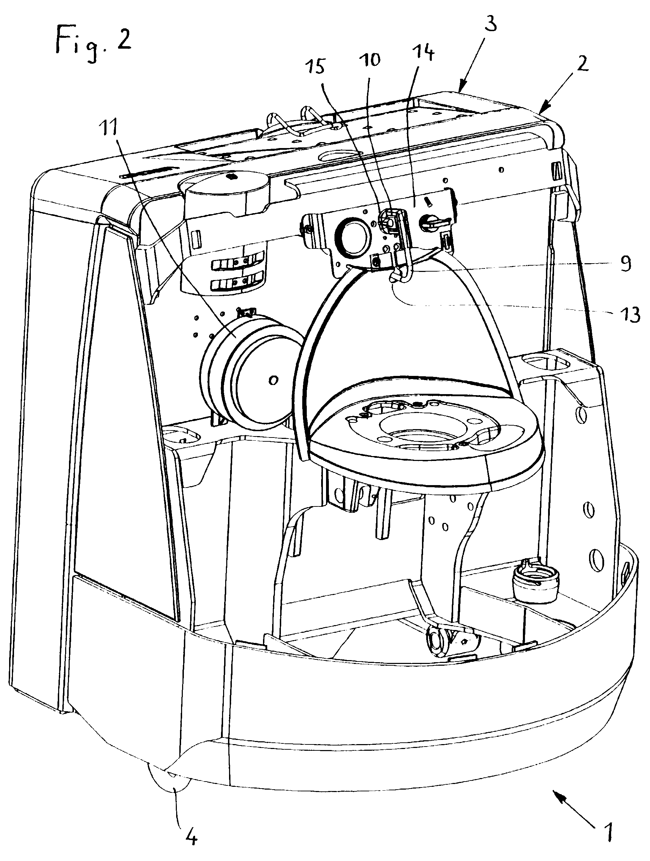

Die bisher beschriebene Ausbildung entspricht dem Stand der Technik. Neu ist eine fest installierte Kabelaufrolltrommel 11 (Figur 2), die sich im Antriebsteil 2 hinter der vorderen Verkleidungswand 12 (Figur 1) befindet. Diese Kabelaufrolltrommel 11 ist mit einer Zugentlastung versehen und entspricht somit in ihrer Funktion den von Staubsaugern bekannten Aufrolltrommeln. Durch Zug wird das Kabel freigegeben und kann bis zur gewünschten Länge ausgezogen werden, wobei nach dem Ausziehen einer Kabellänge der Aufrollmechanismus blockiert wird, durch erneuten Zug jedoch wieder gelöst werden kann.

Das Kabel 9 ist durch eine den Kabelquerschnitt mit Spiel aufnehmende Gehäuseöffnung 13 aus dem Antriebsteil 2 herausgeführt und an seinem äußeren Ende mit dem Netzstecker 10 versehen, der nicht durch die Gehäuseöffnung 13 hindurch paßt. Die Gehäuseöffnung 13 ist beim dargestellten Ausführungsbeispiel nicht in der Verkleidungswand 12 sondern in einer benachbarten Gehäusewand vorgesehen. Ferner ist in einem Außenteil 14 eine Haltesteckdose 15 angeordnet, die in Form und Größe etwa einer Netzsteckdose entspricht, so daß der Netzstecker 10 außerhalb des Ladebetriebs in die Haltesteckdose 15 eingesteckt werden kann und dann sicher gehalten ist, wie es Figuren 1 und 2 zeigen. Anders als eine Netzsteckdose dient die Haltesteckdose 15 jedoch nicht der Stromentnahme und ist dementsprechend nicht mit einer Stromquelle verbunden.

Allerdings kommt der Haltesteckdose insofern auch eine elektrische Funktion zu, als sie einer im oder hinter dem Außenteil 14 angeordneten Schaltungsanordnung zugeordnet ist, die in die Stromzuführung von den Batterien zum Fahrantrieb und zum Hubantrieb sowie in die Verbindungsleitung zwischen dem Ladegerät und den Batterien eingeschaltet ist. Die Steckerstifte des in die Haltesteckdose 15 eingesteckten Netzsteckers 10 führen zu einer Unterbrechung der Verbindungsleitung zwischen dem Ladegerät und den Batterien sowie zu einem Schließen der Stromzuführungsleitung zum Fahrantrieb und zum Hubantrieb des Gabelhubwagens 1. Umgekehrt sind bei aus der Haltesteckdose 15 herausgezogenem Netzstecker 10 die Verbindungsleitung zwischen dem Ladegerät und den Batterien geschlossen und die Stromzuführungsleitung von den Batterien zum Fahrantrieb und zum Hubantrieb unterbrochen.

Somit wird durch die Schaltungsanordnung auf einfache Weise gewährleistet, daß beim Laden der Batterien, zu dem der Netzstecker 10 der Haltesteckdose 15 entnommen und in eine Netzsteckdose eingeführt werden muß, der Gabelhubwagen 1 auch ohne hochgestellte und damit einen Bremseffekt auslösende Deichsel 5 weder verfahren noch sein Lastteil 3 angehoben werden kann. Andererseits ist nach dem Ladevorgang der Gabelhubwagen 1 erst dann wieder betriebsbereit, wenn der Netzstecker 10 ordnungsgemäß in die Haltesteckdose 15 eingesteckt ist. In dieser Stellung ist, wie Figuren 1 und 2 veranschaulichen, das Kabel 9 praktisch vollständig auf die Kabelaufrolltrommel 11 aufgewickelt, so daß sich keine störende Kabellänge außerhalb der Verkleidungswand 12 bzw. auf der Außenseite des Gabelhubwagens 1 befindet.

## Patentansprüche

1. Gabelhubwagen mit Batterien für den Fahrbetrieb und/oder das Anheben des Lastteils (3) und mit einem integrierten Ladegerät, das mit einem einen Netzstecker (10) aufweisenden Kabel (9) zum Anschluß an eine Netzsteckdose versehen ist, **dadurch gekennzeichnet,** daß eine fest eingebaute Kabelaufrolltrommel (11) vorgesehen ist, von der das Kabel (9) durch eine dem Kabelquerschnitt angepaßte Gehäuseöffnung (13) nach außen zum Netzstecker (10) geführt ist.

2. Gabelhubwagen nach Anspruch 1, **dadurch gekennzeichnet,** daß die Kabelaufrolltrommel (11) mit einer den Aufrollmechanismus blockierenden Zugentlastung versehen ist, die nach dem Ausziehen einer Kabellänge wirksam wird und durch erneutes Ausziehen wieder gelöst wird.

3. Gabelhubwagen nach Anspruch 1 oder 2, **dadurch gekennzeichnet,** daß eine von außen zugängliche Haltesteckdose (15) zur Aufnahme des Netzsteckers (10) außerhalb des Ladebetriebs vorgesehen ist.

4. Gabelhubwagen nach Anspruch 3, **dadurch gekennzeichnet,** daß die Haltesteckdose (15) einer Schaltungsanordnung derart zugeordnet ist, daß bei nicht in die Haltesteckdose (15) eingestecktem Netzstecker (10) der Fahrantrieb und/oder der Hubantrieb ausgeschaltet sind.

5. Gabelhubwagen nach Anspruch 4, **dadurch gekennzeichnet,** daß die Schaltungsanordnung so ausgebildet ist, daß bei in die Haltesteckdose (15) eingestecktem Netzstecker die elektrische Verbindung zwischen dem Ladegerät und den Batterien unterbrochen ist.
